# EUROPÄISCHE PATENTANMELDUNG

(11) **EP 1 480 431 A1**
(43) Veröffentlichungstag der Anmeldung: **24.11.2004**
(21) Anmeldenummer: 04102206.2
(22) Anmeldetag: 19.05.2004
(51) Int. Cl.: H04M 3/54, H04M 7/00

(54) **Verfahren zur Signalisierung von Anrufumleitungsparametern in einem SIP-Netz**

(30) Priorität: 23.05.2003 DE 10323403
(71) Anmelder: SIEMENS AKTIENGESELLSCHAFT, 80333 München (DE)
(72) Erfinder: Hoffmann, Klaus, 81735, München (DE)

(57) **Zusammenfassung**

Es ist eine Aufgabe der Erfindung, ein Verfahren anzugeben, mit dem es möglich ist, Grund der Anrufumleitung und neue Zielrufnummer in einem SIP Netz zu signalisieren, falls eine SIP Netzeinheit in der Verbindung verbleibt. Es ist eine weitere Aufgabe der Erfindung, ein Verfahren anzugeben, mit dem es möglich ist, Grund der Anrufumleitung und neue Zielrufnummer zwischen einem ISUP/BICC-Netz und einem SIP-Netz zu signalisieren.

Die Erfindung betrifft daher ein Verfahren zur Signalisierung von Anrufumleitungsparametern in einem SIP-Netz (12), demgemäß zur Signalisierung der Anrufumleitung eine Provisional Response 18x oder eine Response 3xx gemäß IETF RFC 3261 verwendet wird, die Umleitungskennzeichen aufweist. Für Verbindungen zwischen dem SIP-Netz (12) und einem weiteren Netzwerk (3) sieht die Erfindung ferner eine zur bidirektionalen Umsetzung von SIP-Nachrichten oder SIP-T-Nachrichten in ein Protokoll des weiteren Netzwerkes (3) vor.

## Beschreibung

Paketorientierte Sprachnetze, auch Voice over Packet VoP Netze genannt, ersetzen oder ergänzen in zunehmendem Maße herkömmliche leitungsvermittelnde Sprachnetze (PSTN = Public Switched Telephone Networks). Gleichzeitig verschmelzen bislang getrennte, dedizierte Netze zur Datenübertragung und Sprachübertragung zu einem einzigen Netz, welches häufig konvergentes Netz oder Netzwerk der nächsten Generation (NGN = Next Generation Network) genannt wird.

Als Netzzugangseinheiten für Nutzer der paketorientierten Netze dienen dabei sogenannte Media Gateways, die in Verbindung mit den Teilnehmerendgeräten einerseits und dem restlichen Netzwerk andererseits stehen. Media Gateways dienen darüber hinaus auch der Anbindung von PSTN-Netzabschnitten an die paketorientierten Netze.

In Kommunikationsnetzen der betrachteten Art wird häufig zwischen Signalisierungsinformation und Nutzinformation unterschieden. Signalisierungsinformationen betreffen beispielsweise Aufbau, Abbau und weitere Steuerungsvorgänge einer Verbindung, wobei über die Verbindung die Nutzinformationen beispielsweise zwischen zwei Teilnehmern übertragen werden.

Entsprechend existieren zwei zumindest logisch verschiedene Subnetze im Kommunikationsnetz: das Subnetz für Signalisierung und das Subnetz für Nutzinformationen. Besteht eine Verbindung im Subnetz für Nutzinformationen, wird diese häufig Nutzkanal oder Bearer Channel genannt.

Die Nutzinformationen werden im paketorientierten Netz über die genannten Media Gateways geleitet, während die Signalisierungsinformationen durch Media Gateway Controller ausge wertet und transportiert werden. Ansprechend auf die Signalisierungsinformationen steuern die Media Gateway Controller (MGC) die Media Gateways (MG), welche wiederum die empfangene Steuerung in eine Beeinflussung der Nutzkanäle umsetzen.

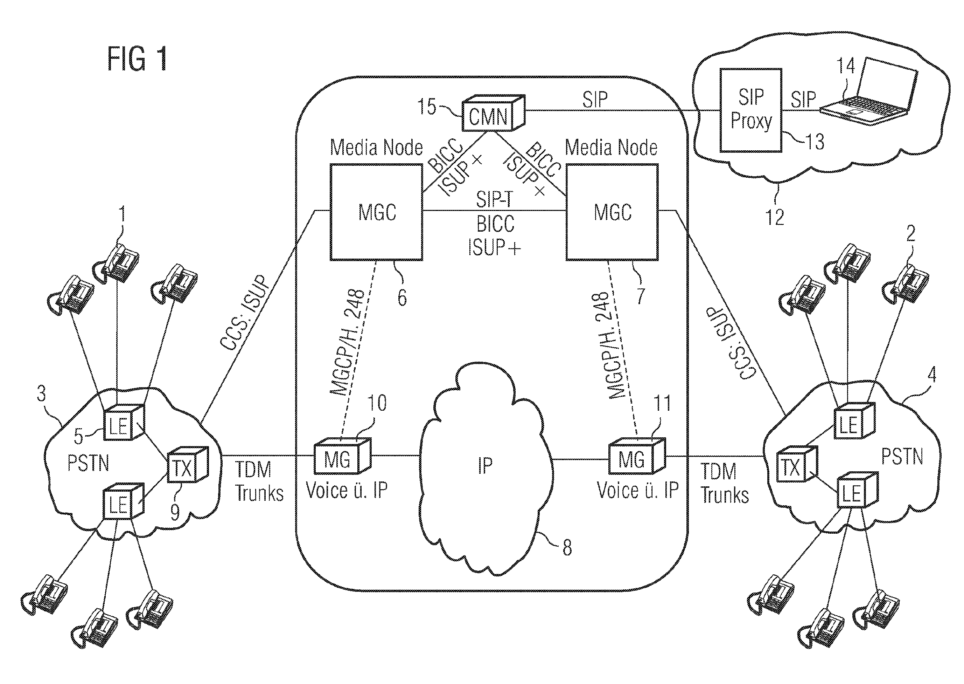

Zur Kommunikation zwischen MGC sind verschiedene Signalisierungsprotokolle vorgesehen. Zu diesen gehört beispielsweise BICC CS2 (Bearer Independent Call Control - Capability Set 2) gemäß ITU-T Q.1902.X, im Zusammenhang mit einem eigenen Service Indicator (SI) für den Message Transfer Part (MTP) und Q.765.5 Bearer Application Transport (BAT). Dieser Standard beschreibt für den Fall, daß im paketorientierten Netz das Real-Time Protocol (RTP) vorgesehen ist, Möglichkeiten für das Vorsehen von bekannten Diensten des PSTN in einer Netzwerkanordnung, bei der zwei PSTN-Netzwerkabschnitte mittels paketorientiertem Netz verbunden sind. Eine solche Netzwerkanordnung ist beispielhaft in Fig. 1 dargestellt.

Fig. 1 zeigt in schematischer Weise, wie bei einer Trennung von Signalisierung und Nutzkanal die für den Aufbau einer Kommunikationsverbindung zwischen zwei Telekommunikations-Endgeräten 1, 2 notwendigen Informationen zwischen den einzelnen Netzkomponenten ausgetauscht werden. Dabei fordert ein A-Teilnehmer über ein Telekommunikationsendgerät 1, welches an ein erstes PSTN 3 angeschlossen ist, bei einer zugehörigen Ortsvermittlungsstelle (LE = Local Exchange) 5 einen Rufaufbau zu einem Telekommunikationsendgerät 2 eines B-Teilnehmers an.

Diese Rufanforderung bewirkt einen Verbindungsaufbau, der über zwei MGC 6, 7 erfolgt. Dabei werden Informationen mittels eines entsprechenden Signalisierungsprotokolls an einen ersten Media Gateway Controller 6 übertragen. In der Praxis wird als Signalisierungsprotokoll häufig das Zeichengabesystem Nr. 7, auch bekannt als Common Channel Signaling System 7 (CCS7 oder SS7) eingesetzt, wobei speziell für den Verbindungsaufbau Nachrichten des ISDN User Part (ISUP) verwendet werden.

Der MGC 6 kommuniziert seinerseits mit einem zweiten Media Gateway Controller 7 mittels eines weiteren Signalisierungsprotokolls, etwa BICC CS2. Der zweite MGC 7 erhält somit alle Dienst- oder Leistungsmerkmale betreffenden Signalisierungsinformationen und überträgt diese Informationen an ein PSTN 4, in welchem das Endgerät 2 des B-Teilnehmers angeordnet ist. Die Übertragung erfolgt wiederum über ein entsprechendes Signalisierungsprotokoll, in einem PSTN in der Regel wiederum CCS7.

Neben dem bereits erwähnten weiteren Signalisierungsprotokoll BICC CS2 für die MGC-zu-MGC-Kommunikation wurden durch die IETF die Standards RFC 3261 (SIP = Session Initiation Protocol) und RFC 3204 (ISUP MIME Type) entwickelt, die den Tunneltransport von ISUP Nachrichten in SIP Nachrichten erlauben. Solche SIP Nachrichten zur MGC-zu-MGC-Kommunikation werden auch als SIP-T Nachrichten bezeichnet.

In Fig. 1 ist ferner ein Netzelement 15 dargestellt, welches häufig als Call Mediation Node CMN bezeichnet wird. Dieses Netzelement 15 dient dem Transfer von Signalisierungsnachrichten, wobei durch den CMN auch eine Umsetzung zwischen verschiedenen Signalisierungsprotokollen erfolgen kann.

Über das Netzelement 15 ist im Beispiel der Fig. 1 ein SIP Netzwerk 12 mit den restlichen Signalisierungselementen verbunden. Auf die Darstellung der Nutzkanalanbindung des SIP Netzwerkes wurde verzichtet. Das SIP Netzwerk 12 weist beispielhaft einen SIP Proxy 13 und einen SIP Teilnehmer 14 auf.

Als nachteilig hat es sich herausgestellt, daß mit aktuellen Implementierungen die Signalisierung von Anrufumleitungen, insbesondere die Signalisierung des Grundes der Anrufumleitung, nicht in der Weise erfolgen kann, wie es von Benutzern moderner Kommunikationsnetze erwartet wird und aus den herkömmlichen Telefonnetzen bekannt ist. Ferner ist die Über mittlung der neuen Zielrufnummer bei einer Anrufumleitung (ISUP redirection number) in aktuellen SIP Implementierungen nicht möglich.

Ein Internet-Draft der IETF mit dem Titel "draft-levy-sipdiversion-05.txt" behandelt den Themenkomplex "Anrufumleitung" für eine reine SIP-Umgebung.

RFC 3398 der IETF "ISUP to SIP Mapping" behandelt den Fall einer gemischten ISUP-SIP-Umgebung. Die in diesem RFC enthaltenen Mechanismen bieten jedoch weder eine Signalisierung für den Grund der Anrufumleitung noch für die neue Zielrufnummer, falls das Übergangsamt noch in der Verbindung verbleibt, etwa um weitere Dienste zur Verfügung zu stellen und/oder zu steuern. In bekannten Dokumenten wird von einer Auslösung der Verbindung in Rückwartsrichtung innerhalb des PSTN bis zu einer davorliegenden Vermittlungsstelle ausgegangen, in der dann die Anrufumleitung erfolgt.

Es ist daher eine Aufgabe der Erfindung, ein Verfahren anzugeben, mit dem es möglich ist, Grund der Anrufumleitung und neue Zielrufnummer in einem SIP Netz zu signalisieren, falls eine SIP Netzeinheit in der Verbindung verbleibt. Es ist eine weitere Aufgabe der Erfindung, ein Verfahren anzugeben, mit dem es möglich ist, Grund der Anrufumleitung und neue Zielrufnummer zwischen einem ISUP/BICC-Netz und einem SIP-Netz zu signalisieren.

Diese Aufgabe wird durch ein erfindungsgemäßes Verfahren zur Signalisierung von Anrufumleitungsparametern in einem SIP-Netz gelöst, demgemäß zur Signalisierung der Anrufumleitung eine Provisional Response oder eine Response gemäß IETF RFC 3261 verwendet wird, die Umleitungskennzeichen aufweist, welche vorzugsweise zumindest Informationen bezüglich Grund der Umleitung und Ziel der Umleitung enthalten.

Diese Umleitungskennzeichen können als Diversionsheader ausgebildet sein, die beispielsweise in Anlehnung an "draftlevy-sip-diversion-05.txt" vorteilhaft wie folgt definiert sind:

| | where enc. | e-e | ACK | BYE | CAN | INV | OPT | REG |
|---|---|---|---|---|---|---|---|---|
| Diversion | 181 | h | - | - | - | o | - | - |

In vorteilhafter Weise wird ferner für Verbindungen zwischen dem SIP-Netz und einem weiteren Netz eine bidirektionale Umsetzung von SIP-Nachrichten oder SIP-T-Nachrichten in ein Protokoll des weiteren Netzwerkes vorgesehen. Damit ermöglicht die Erfindung SIP-Teilnehmern die Nutzung aller bekannten Leistungsmerkmale bei Anrufweiterleitung, insbesondere den Grund der Anrufumleitung und die neue Zielrufnummer.

Die vorliegende Erfindung weist ferner folgende Vorteile auf:
1. Beim Übergang einer Verbindung von einem SIP-Netz in ein PSTN/BICC-Netz kann ein rufender SIP-Teilnehmer (Calling Party, A-Teilnehmer) den Dienst Anrufumleitung vollständig nutzen, wenn ein gerufener PSTN-Teilnehmer (Called Party, B-Teilnehmer) die Anrufumleitung durchführt. Bei der Anrufumleitung verbleibt üblicherweise die Vermittlungsstelle im PSTN, an der die Umleitung durchgeführt wird, in der Verbindung. In analoger Weise kann eine Umsetzung der Signalisierungsnachrichten vorgesehen werden, wenn der B-Teilnehmer ein Voice over DSL Teilnehmer oder ein H.323 Teilnehmer ist.
2. Beim Übergang einer Verbindung vom PSTN/BICC-Netz in ein SIP-Netz kann ein rufender PSTN-Teilnehmer den Dienst Anrufumleitung vollständig nutzen, wenn ein gerufener SIP-Teilnehmer die Anrufumleitung durchführt.
3. Falls die Verbindung einschließlich der Umleitung vollständig innerhalb des SIP-Netzes stattfindet, d.h. die Quelle, das ursprüngliche Ziel und auch das Ziel der Anrufumleitung liegen im SIP-Netz, kann die Erfindung eingesetzt werden, wenn der Diensteanbieter:
   a) aus Dienstesicht, etwa für Geschäftsmodelle für das Anbieten von eigenen IN Diensten, ein Interesse daran hat, oder
   b) aus kaufmännischer Sicht ein Interesse hat, mit seinen Diensterechnern nur bestimmte Dienste zu erlauben, beispielsweise um sicherzustellen, daß kein Mißbrauch der Infrastruktur erfolgt, indem etwa verhindert wird, daß eine höhere Bandbreite verwendet wird als erlaubt und in Rechnung gestellt, oder daß ein Codec benutzt wird, der nicht angemeldet wurde, oder
   c) wegen einer Anforderung für Überwachung (Lawful Interception) des ursprünglich angewählten B-Teilnehmers ein Interesse hat bzw. gezwungen ist, einen IP/IP Gateway in der Verbindung zu belassen, z.B. weil der RTP Datenstrom zum Abgriff für die Überwachung gedoppelt werden muß.

Im Fall des Interworking eines SIP-Netzes und eines ISUP/BICC-Netzes kann die Umsetzung der Nachrichten von BICC/ISUP in SIP/SIP-T und umgekehrt vorzugsweise gemäß folgender Tabelle 1 erfolgen:

**Tabelle 1**

| ISUP/BICC | SIP |
|---|---|
| IAM Original Called Number | INVITE (Diversion Header, (name-addr, reason, counter, limit)) |
| | |
| Redirecting Number | |
| Redirection Information (reason, counter) | |
| ACM, CPG | Provisional Response 18x (als Antwort auf INVITE) |
| Call Diversion Parameter | (Diversion Header, (reason)) |
| Redirection Number | Diversion Header (name-addr) |
| ACM, CPG | 3xx response (auf INVITE) (Diversion Header, (reason)) |
| Call Diversion Parameter | Diversion Header (name-addr) |
| Redirection Number | Contact |

Abweichend zu den von nicht länger in der Verbindung verbleibenden SIP Knoten verwendeten Responses 3xx wird dabei in den Provisional Responses 18x, die von den im Fall der Umleitung in der Verbindung verbleibenden SIP Knoten in Richtung des rufenden Teilnehmers gesendet werden, der Diversionsheader mit einer Kommunikationsadresse des Umleitungszieles versehen.

Mit den Responses 3xx, definiert in RFC 3261, wird in Rückwärtsrichtung bezüglich des Verbindungsaufbaus durch ein näher am Ziel liegendes SIP-Element dem vorhergehenden SIP-Element ansprechend auf eine vom vorhergehenden SIP-Element empfangene INVITE-Nachricht mitgeteilt, daß mindestens ein alternatives Ziel, z.B. ein Umleitungsziel, existiert, zu welchem die INVITE-Nachricht gesendet werden soll, um den Verbindungsaufbau fortzusetzen.

Zu diesem Zweck wird ein CONTACT Header eingesetzt. Mit dem Senden der Response 3xx wird auch angezeigt, daß das näher am Ziel liegende SIP-Element, welches die Response 3xx sendet, nicht in den weiteren Verbindungsaufbau und die letztlich etablierte Verbindung einzubeziehen ist.

Demgegenüber zeigt eine vom näher am Ziel liegenden SIP-Element gesendete Provisional Response 18x an, daß die Verbindung noch nicht etabliert ist, beispielsweise wird der Teilnehmer gerufen, oder eine Umleitung wird in diesem näher am Ziel liegenden SIP-Element oder in einem noch näher am Ziel liegenden SIP-Element umgeleitet. Implizit zeigt das näher am Ziel liegende SIP-Element damit auch an, daß es in den weiteren Verbindungsaufbau einbezogen bleibt.

In einem Aspekt der Erfindung wird für sogenannte recursing SIP-Proxy-Elemente eine Möglichkeit zur Weiterleitung der Information, durch welches Netzelement umgeleitet wurde und welche Gründe die Umleitung hatte in Rückwärtsrichtung, also in Richtung zum rufenden Teilnehmer, vorgesehen.

In RFC3261, Kapitel 16.7 "Response processing" ist angegeben, daß ein SIP-Element, welches eine Response 3xx empfängt, selbst in der Verbindung verbleiben kann. Ein SIP-Element bzw. SIP-Proxy, wird recursing genannt, wenn das SIP-Element bzw. der SIP-Proxy bei Empfang einer Response 3xx in der Verbindung verbleibt und die INVITE zum neuen Ziel sendet.

Beispielhafte Gründe für das recursing-Verhalten eines SIP-Elementes sind, wie oben ausführlich dargelegt, Vergebührung, Anbieten weiterer Dienstmerkmale im Verlauf des Verbindungsaufbaus bzw. der Verbindung, Lawful Interception.

Ein non recursing SIP-Element bzw. SIP-Proxy ist hingegen definiert als ein Element, welches die Response 3xx weiterleitet und damit in Rückwärtsrichtung anzeigt, daß dieses SIP-Element bzw. dieser SIP-Proxy nicht in den weiteren Verbindungsaufbau und die letztlich etablierte Verbindung einzubeziehen ist.

Gemäß des Aspektes der vorliegenden Erfindung wird für ein recursing SIP-Element bzw. einen recursing SIP-Proxy, oder allgemeiner für den ersten SIP Knoten bzw. SIP Proxy, der in der Verbindung verbleibt, eine Umsetzung der durch diesen Knoten empfangenen Responses 3xx in durch diesen Knoten weitergeleitete Provisional Responses 18x vorgesehen, vorzugsweise entsprechend der folgenden Tabelle 2:

**Tabelle 2**

| SIP Response 3xx | SIP Provisional Response 18x |
|---|---|
| (Diversion Header, (reason)) | (Diversion Header, (reason)) |
| Diversion Header (name-addr) CONTACT auf Diversion Header abbilden | Diversion Header (name-addr) |

Im folgenden wird die Erfindung anhand eines Ausführungsbeispiels im Zusammenhang mit Zeichnungen näher erläutert. Darin zeigen:
Fig. 1 eine Netzwerkanordnung, bei der zwei PSTN-Netzabschnitte mittels eines paketorientierten Netzes verbunden sind, und
Fig. 2A-C verschiedene Integrationsstufen eines Ausschnittes eines Signalisierungsnetzwerkes, welches sowohl PSTN Signalisierung als auch SIP Signalisierung aufweist.

In Fig.1 ist, wie bereits erläutert, eine Netzwerkanordnung dargestellt, die den Fall darstellt, daß zwei PSTN-Netzabschnitte 3, 4 mittels eines paketorientierten Netzes 8 verbunden sind. Dabei werden die Verbindungssteuerungsinformationen über Media Gateway Controller 6, 7 geleitet, die Nutzinformationen hingegen über Media Gateways 10, 11. Im Zusammenhang mit der vorliegenden Erfindung wird zwischen den MGC 6, 7 das SIP bzw. SIP-T Protokoll eingesetzt, wobei die Umsetzung zwischen den PSTN-Signalisierungen und SIP beispielsweise gemäß obenstehender Tabelle 1 erfolgen kann.

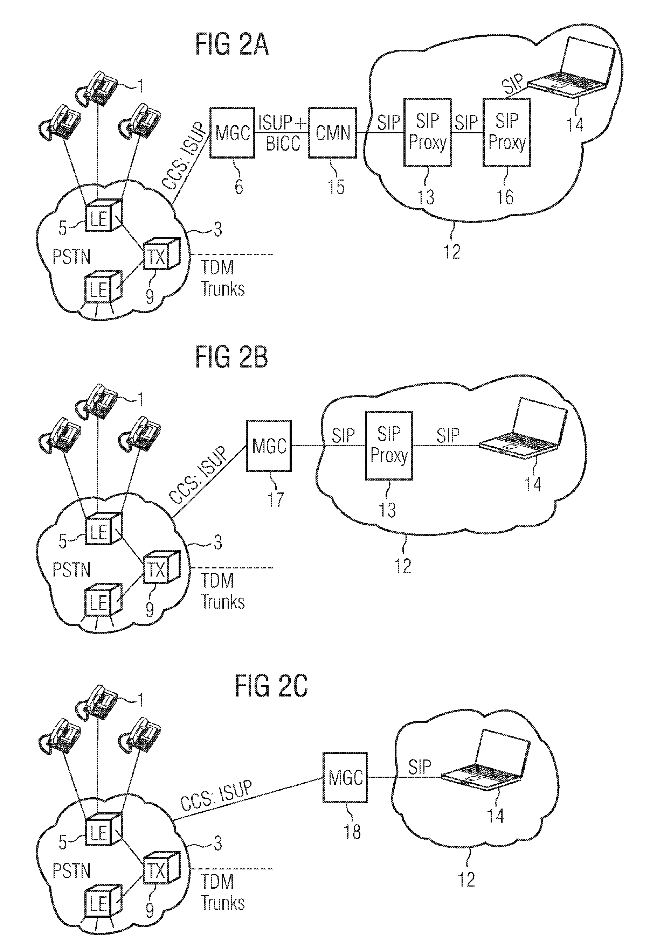

Ferner ist in Fig. 1 ein SIP Netzwerk 12 dargestellt, welches beispielhaft einen SIP Proxy 13 und ein SIP Endgerät 14 aufweist und mittels SIP mit dem Call Mediation Node 15 verbunden ist, wobei hier nur die Signalisierungsverbindungen schematisch dargestellt sind. Dieser Ausschnitt des Signalisierungsnetzwerkes ist in Fig. 2A-C mit weiteren Details dargestellt.

In Fig. 2A ist ein Ausschnitt der Netzwerkanordnung aus Fig. 1 dargestellt, bei der das PSTN 3 mit dem SIP Netzwerk 12 verbunden ist. Dabei sind in Fig. 2A lediglich die Signalisierungsverbindungen und Signalisierungsnetzwerkelemente dargestellt.

Das PSTN 3 ist im Beispiel der Fig. 2A mittels des ISDN User Part ISUP mit dem MGC 6 verbunden. Der MGC ist mittels BICC oder ISUP+ mit dem CMN 15 verbunden. Der CMN 15 ist mittels SIP mit dem ersten SIP Proxy 13 verbunden, welcher wiederum mittels SIP mit einem zweiten SIP Proxy 16 verbunden ist. Mit dem zweiten SIP Proxy 16 schließlich ist das SIP Engerät 14 verbunden. Die beiden SIP Proxies 13, 16 und das SIP Endgerät 14 bilden dabei das SIP Netzwerk 12.

Die Signalisierung einer Verbindungsanforderung von einem Teilnehmerendgerät des PSTN, beispielsweise Endgerät 1, zum SIP Endgerät 14 erfolgt im Beispiel der Fig. 2A wie folgt: die Verbindungsanforderung wird im PSTN generiert und mittels ISUP an den MGC 6 geleitet, dort in ISUP+ oder BICC umgesetzt und an den CMN 15 weitergeleitet. Im CMN 15 erfolgt die Umsetzung in SIP und die Weiterleitung der Verbindungsanforderung in das SIP Netz 12, hier den ersten SIP Proxy 13 und weiter an den zweiten SIP Proxy 16. Vom zweiten SIP Proxy 16 wird die Verbindungsanforderung schließlich an das SIP Endgerät 14 geleitet.

Betrachtet wird im folgenden der Fall, daß das SIP Endgerät 14 mit Hilfe einer Response 3xx als Antwort auf die Verbin dungsanforderung, die in Form einer INVITE-Nachricht an das Endgerät übertragen wird, eine Rufumleitung zu einem (nicht dargestellten) Umleitungsziel signalisiert.

Alternativ kann auch ein anderes SIP Element, beispielsweise der zweite SIP Proxy 16, stellvertretend für das SIP Endgerät 14 die Response 3xx als Antwort auf die Verbindungsanforderung senden, ohne daß die Verbindungsanforderung überhaupt an das SIP Endgerät 14 weitergeleitet wird, etwa im Fall einer im SIP Netzwerk hinterlegten festen Rufumleitung betreffend das SIP Endgerät 14.

Grundsätzlich sind alle vier der dargestellten Signalisierungselemente 6, 15, 13, 16 in der Lage, die Umleitung tatsächlich auszuführen.

Im einzelnen kann die Umleitung bereits durch den zweiten SIP Proxy 16 ausgeführt werden, wobei in diesem Fall (Fall 1) alle Elemente 6, 15, 13, 16 in der Verbindung verbleiben.

Die Umleitung kann andererseits durch den ersten SIP Proxy 13 ausgeführt werden, wobei dann der zweite SIP Proxy 16 nicht in der Verbindung verbleibt (Fall 2).

Die Umleitung kann auch durch den CMN 15 ausgeführt werden, wobei in diesem Fall (Fall 3) keiner der SIP Proxies 13, 16 in der Verbindung verbleibt.

Schließlich kann auch vorgesehen werden (Fall 4), daß keines der Signalisierungselemente mit Ausnahme des MGC 6 in der Verbindung verbleibt, wobei dann die Umleitung durch den MGC 6 durchgeführt wird. Es gibt ferner den Fall, daß die Verbindung im PSTN umgeleitet wird, der im Zusammenhang mit dem Fall 4 betrachtet wird.

Folgende Tabelle 3 zeigt für die genannten Fälle 1..4 die jeweils zwischen den Netzelementen MGC 6, CMN 15, erster SIP Proxy 13 und zweiter SIP Proxy 16 in Rückwärtsrichtung bezüglich des Verbindungsaufbaus gesendeten Nachrichten:

**Tabelle 3**

| | Endgerät 14 - > Proxy 16 | Proxy 16 -> Proxy 13 | Proxy 13 -> CMN 15 | CMN 15 -> MGC 6 | MGC 6 -> PSTN 3 |
|---|---|---|---|---|---|
| Fall 1 | Response 3xx | Prov. Response 18x | Prov. Response 18x | CPG | CPG |
| Fall 2 | Response 3xx | Response 3xx | Prov. Response 18x | CPG | CPG |
| Fall 3 | Response 3xx | Response 3xx | Response 3xx | CPG | CPG |
| Fall 4 | Response 3xx | Response 3xx | Response 3xx | REL | CPG |

Dabei steht CPG für die ISUP Nachricht Call Progress, die beim Verbindungsaufbau insbesondere im Zusammenhang mit der Signalisierung von Rufumleitungen verwendet wird. REL ist die ISUP Nachricht Release, die verwendet wird, einen Verbindungsabschnitt (hier zwischen CMN 15 und MGC 6) auszulösen.

Es sei darauf hingewiesen, daß Tabelle 3 lediglich ein Beispiel für die zu sendenden Nachrichten umfaßt. Zwischen CMN 15 und MGC 6 sind die Nachrichten als ISUP bzw. ISUP+ Nachrichten dargestellt. Kommt für die Kommunikation zwischen diesen beiden Netzelementen ein anderes Protokoll zum Einsatz, werden die durch den CMN 15 empfangenen Nachrichten entsprechend auf äquivalente Nachrichten des anderen Protokolls abgebildet.

Der Fall 4 weist ferner eine Besonderheit auf, indem für den Fall 4, in welchem auch der CMN 15 nicht in der Verbindung verbleibt, der Zweig der Verbindung zischen MGC 6 und CMN 15 mittels einer REL Nachricht ausgelöst wird. Um die Signali sierung der Umleitungskennzeichen, insbesondere Umleitungsziel, Umleitungsgrund und veranlassendes Netzwerkelement, sicherzustellen, wird die Information der SIP Response 3xx erfindungsgemäß wie in folgender Tabelle 4 beschrieben auf diese REL Nachricht abgebildet:

**Tabelle 4**

| SIP | ISUP/BICC |
|---|---|
| Response 3xx (Diversion Header, (reason)) | REL mit Cause 31 (optional) Parameter "Redirection Information" enthält den reason |
| Diversion Header (name-addr) Contact | Redirection number |

Das BICC/ISUP Vermittlungselement, welches die so parametrisierte REL Nachricht empfängt und die Umleitung ausführt, indem beispielsweise eine IAM zum neuen Ziel gesendet wird, erzeugt aus der empfangenen REL eine CPG, wobei die enthaltenen Informationselemente wie in folgender Tabelle 5 angegeben umgesetzt werden können:

**Tabelle 5**

| ISUP/BICC | ISUP/BICC |
|---|---|
| REL mit Cause 31 (optional) | ACM, CPG |
| Parameter "Redirection Information" (enthält den reason) | Call Diversion Parameter |
| Redirection number | Redirection Number |

Im Beispiel der Fig. 2A ist das BICC/ISUP Vermittlungselement, welches die REL auf die CPG umsetzt, der CMN 15. Diese Umsetzung kann auch erfolgen, wenn die Verbindung im PSTN umgeleitet wird.

In folgender Tabelle 6 werden die stattfindenden Protokollumsetzungen in den oben beschriebenen Fällen 1..4 aufgeführt:

**Tabelle 6**

| | Ort der Umsetzung | Umsetzung von - auf | Umsetzung dargestellt in |
|---|---|---|---|
| Fall 1 | zweiter Proxy 16 | Response 3xx auf Prov. Response 18x | Tabelle 2 |
| Fall 2 | erster Proxy 13 | Response 3xx auf Prov. Response 18x | Tabelle 2 |
| Fall 3 | CMN 15 | Response 3xx auf CPG | Tabelle 1 |
| Fall 4 | MGC 6 | Response 3xx auf REL | Tabelle 4 |

Fig. 2B und 2C zeigen schematisch ebenfalls den bereits im Zusammenhang mit Fig. 2A betrachteten Ausschnitt der Netzwerkanordnung aus Fig. 1. Dabei zeigen die Fig. 2B und 2C verschiedene Stufen bei der Integration der Funktionen der Netzelemente 6, 15, 13, 16 aus Fig. 2A.
In Fig. 2B umfaßt ein erweiterter MGC 17 die Funktionalität des MGC 6 und des CMN 15. Dies bedeutet, daß die Umsetzung von ISUP/BICC auf SIP und umgekehrt durch den erweiterten MGC 17 erfolgt. Ferner ist in der Darstellung der Fig. 2B lediglich ein SIP Proxy 13 dargestellt.

In Fig. 2C ist ein nochmals erweiterter MGC 18 dargestellt, der über die Funktionalität des MGC 17 aus Fig. 2B hinaus auch noch die Funktionalität eines SIP Proxy aufweist. Dies bedeutet, daß der SIP Teilnehmer 14 direkt mit dem MGC 18 verbunden werden kann.

Andere, alternative Realisierungen der Signalisierung für Anrufumleitungen mittels des Session Initiation Protocol SIP umfassen die Einführung des Diversionsheaders für andere geeignete response-Nachrichten.

Die Erfindung ist auch dann anwendbar, wenn eine Umsetzung von ISUP Nachrichten und Parametern in SIP Nachrichten und Parameter nicht unmittelbar erfolgt, sondern zunächst andere Protokolle den Informationsgehalt der ISUP Nachrichten und Parameter aufnehmen und erst anschließend eine Umsetzung in SIP erfolgt - nicht dargestellt. Ein solches Zwischenprotokoll, beispielsweise auf dem Weg zwischen PSTN und SIP-Netzwerk, kann z.B. BICC sein.

Ferner kann in analoger Weise eine Umsetzung von SIP/SIP-T zu anderen Protokollen erfolgen, beispielsweise zu analogen Teilnehmeranschlußprotokollen, digitalen Teilnehmeranschlußprotokollen (z.B. DSS1), ein Protokollen von Mobilfunkanwendungen, Voice over DSL VoDSL oder ITU-T H.323.

Darüber hinaus kann die Erfindung vorteilhaft angewendet werden, wenn SIP zwischen Media Gateway Controllern zum Einsatz kommen, die zwei PSTN-Abschnitte miteinander verbinden.

## Patentansprüche

1. Verfahren zur Signalisierung von Anrufumleitungsparametern in einem SIP-Netz (12), demgemäß zur Signalisierung der Anrufumleitung eine Provisional Response oder eine Response gemäß IETF RFC 3261 verwendet wird, die Umleitungskennzeichen aufweist.

2. Verfahren nach Anspruch 1,
**dadurch gekennzeichnet,**
**daß** die Umleitungskennzeichen zumindest Informationen bezüglich Grund der Umleitung und Ziel der Umleitung aufweisen.

3. Verfahren nach einem der Ansprüche 1 oder 2,
**dadurch gekennzeichnet,**
**daß** die Umleitungskennzeichen durch einen Diversionsheader gebildet werden, welcher wie folgt definiert ist:
| | | | | | | | | |
|---|---|---|---|---|---|---|---|---|
| | where enc. | e-e | ACK | BYE | CAN | INV | OPT | REG |
| Diversion | 18x | h | - | - | - | o | - | - |

4. Verfahren nach einem der Ansprüche 1 bis 3,
**dadurch gekennzeichnet,**
**daß** für Verbindungen zwischen dem SIP-Netz (12) und einem weiteren Netzwerk (3) eine bidirektionale Umsetzung von SIP-Nachrichten oder SIP-T-Nachrichten in ein Protokoll des weiteren Netzwerkes (3) vorgenommen wird.

5. Verfahren nach Anspruch 4,
**dadurch gekennzeichnet,**
**daß** das weitere Netzwerk (3) ein Telekommunikationsnetz ist, in welchem Signalisierungsnachrichten gemäß eines der folgenden Protokolle transportiert werden: analoges Teilnehmeranschlußprotokoll, digitales Teilnehme ranschlußprotokoll, ISDN User Part ISUP, ISUP+, Bearer Independent Call Control BICC.

6. Verfahren nach Anspruch 4,
**dadurch gekennzeichnet,**
**daß** das weitere Netzwerk (3) ein Mobilfunknetzwerk oder ein Netzwerk gemäß einem der folgenden Protokolle ist: Voice over DSL VoDSL, ITU-T H.323.

7. Verfahren nach Anspruch 5,
**dadurch gekennzeichnet,**
**daß** die zur Signalisierung von Anrufumleitungen erforderlichen Parameter und Nachrichten gemäß folgender Tabelle zwischen ISUP oder BICC und SIP oder SIP-T umgesetzt werden:
| ISUP/BICC | SIP/SIP-T |
|---|---|
| IAM Original Called Number | INVITE (Diversion Header, (name-addr, reason, counter, limit)) |
| | |
| Redirecting Number Redirection Information (reason, counter) | |
| ACM, CPG | Provisional Response 18x |
| Call Diversion Parameter Redirection Number | (Diversion Header, (reason)) Diversion Header (name-addr) |
| ACM, CPG | 3xx response (auf INVITE) (Diversion Header, (reason)) |
| Call Diversion Parameter Redirection Number | Diversion Header (name-addr) Contact |

8. Verfahren nach Anspruch einem der Ansprüche 1 bis 8,
**dadurch gekennzeichnet,**
**daß** durch ein die Anrufumleitung ausführendes SIP Netzwerkelement (15, 13, 16) eine empfangene SIP Response 3xx auf eine gesendete SIP Provisional Response 18x umgesetzt wird, indem ein Informationselement CONTACT der Response 3xx auf die Umleitungskennzeichen der Provisional Response 18x abgebildet wird.

9. Verfahren nach Anspruch 8,
**dadurch gekennzeichnet,**
**daß** die empfangene SIP Response 3xx gemäß folgender Tabelle auf die gesendete SIP Provisional Response 18x umgesetzt wird:
| SIP Response 3xx | SIP Provisional Response 18x |
|---|---|
| (Diversion Header, (reason)) | (Diversion Header, (reason)) |
| Diversion Header (name-addr) | Diversion Header (name-addr) |
| CONTACT auf Diversion Header abbilden | |

10. Verfahren nach einem der Ansprüche 1 bis 9,
**dadurch gekennzeichnet,**
**daß** die empfangene SIP Response 3xx gemäß folgender Tabelle auf eine gesendete ISUP/BICC RELEASE Nachricht umgesetzt wird:
| SIP | ISUP/BICC |
|---|---|
| Response 3xx (Diversion Header, (reason)) | REL mit Cause 31 (optional) Parameter "Redirection Information" enthält den reason |
| Diversion Header (name-addr); Contact | Redirection number |

11. Verfahren nach Anspruch 10,
**dadurch gekennzeichnet,**
**daß** eine ISUP/BICC RELEASE Nachricht gemäß folgender Tabelle auf eine gesendete ISUP/BICC Address Complete Mes sage oder Call Progress Message umgesetzt wird:
| ISUP/BICC | ISUP/BICC |
|---|---|
| REL mit Cause 31 (optional) | ACM, CPG |
| Parameter "Redirection Information" (enthält den reason) | Call Diversion Parameter |
| Redirection number | Redirection Number |
